# EUROPEAN PATENT APPLICATION

(11) **EP 1 024 337 A1**
(43) Date of publication of application: **02.08.2000**
(21) Application number: 98941868.6
(22) Date of filing: 14.09.1998
(51) Int. Cl.: F28F 9/02, F28F 9/26

(54) **HEAT EXCHANGER**

(30) Priority: 16.09.1997 JP 25084797
(71) Applicant: Zexel Corporation, Shibuya-ku, Tokyo 150-0002 (JP)
(72) Inventor: KATO, Soichi, Zexel Corporation Kohnan Plant, Osato-gun, Saitama 360-0100 (JP); SAKURADA, Muneo, Zexel Corporation Kohnan Plant, Osato-gun, Saitama 360-0100 (JP); KURIHARA, Shin, Zexel Corporation Kohnan Plant, Osato-gun, Saitama 360-0100 (JP); HAIYA, Sadao, Zexel Corporation Kohnan Plant, Osato-gunSaitama 360-0100 (JP); SUGITA, Takashi, Zexel Corporation Kohnan Plant, Osatogun, Saitama 360-0100 (JP); AKIYAMA, Shoji, Zexel Corporation Kohnan Plant, Osato-gun, Saitama 360-0100 (JP); UMEHARA, Takahumi, Zexel Corporation Kohnan Plant, Osato-gun, Saitama 360-0100 (JP)
(74) Representative: HOFFMANN - EITLE
(86) International application number: JP9804140
(87) International publication number: WO9914545

(57) **Abstract**

A heat exchanger, which has tubes (2) for heat exchanging of a medium, header pipes (4) for distributing and collecting the medium, and connectors (8) for connecting an external pipe for supplying or receiving the medium assembled and brazed into one body, wherein the connectors (8) are provided with stepped sections (83) in order to prevent flux and a brazing material for brazing from entering a joint face (82) with the external pipe. The stepped sections (83) are continuously formed on the entire outer periphery of the connector (8). The joint faces (82) are respectively arranged to face downward with respect to a vertical plane when the flux is applied.

## Description

### TECHNICAL FIELD

The present invention relates to a heat exchanger of a type which has an external pipe for supplying or receiving a heat-exchanging medium connected to a header pipe through a connector.

### BACKGROUND ART

A parallel flow type heat exchanger generally comprises tubes for heat exchanging a medium and fins for promoting the heat exchange of the medium which are alternately layered, and header pipes which are respectively disposed on both ends of the tubes to distribute and collect the medium. Each header pipe is closed its top and bottom end openings by caps, divided its interior by partition plates, and provided with an inlet connector for connecting an external pipe for supplying the medium or an outlet connector for connecting an external pipe for receiving the medium. By configuring as described above, the medium is introduced into the heat exchanger through the inlet connector, flowed in the tubes to travel a plurality of times between the header pipes to perform heat exchanging with outside air, and is discharged through the outlet connector.

The connector may be formed to have a larger size or provided with a fixing screw hole so to also serve as a bracket for attaching the heat exchanger.

Such a heat exchanger is produced by assembling respective members, such as tubes, fins, header pipes, caps, partition plates and connectors, to configure the heat exchanger into one body and brazing the assembled body. The respective members are made of a metallic material which has a brazing material clad on its surface, and assembled into one body by using jigs and the like. The assembled body is conveyed into a furnace and brazed into one body by a heat treatment.

The flux for brazing is applied after assembling the respective members by spraying a suspension containing the flux. The flux serves to remove an oxide from a base metal and the brazing material and to protect the surface of the base metal.

Particularly in recent years, a conveying means such as a belt conveyor is used to automate a production line for applying the flux and brazing for mass production of the heat exchanger.

The aforesaid connector is required to prevent lumps of the brazing material and the flux from adhering to the joint face with respect to the external pipe. If the joint face is contaminated by the flux and the brazing material, airtightness between the connector and the external pipe is lost, causing leakage of the medium.

A cover is conventionally used to cover the joint face when the flux is applied and the brazing is performed. But, it is not satisfactory because the flux and the brazing material tend to flow along the surfaces of the header pipes and the connector and enter the cover.

Therefore, it is an object of the present invention to provide a heat exchanger which can prevent a joint face of a connector with respect to an external pipe from being contaminated by flux and a brazing material among others.

### DISCLOSURE OF THE INVENTION

The invention recited in claim 1 is a heat exchanger, which has tubes for heat exchanging of a medium, header pipes for distributing and collecting the medium, and connectors for connecting an external pipe for supplying or receiving the medium assembled and brazed into one body, wherein stepped sections are formed on the connectors in order to prevent flux and a brazing material for brazing from entering joint faces of the connectors with respect to the external pipes.

Thus, the heat exchanger of the present invention can prevent the joint face of the connector with respect to the external pipe from being contaminated by the flux and the brazing material because the connector is provided with the stepped sections to prevent the flux for brazing and the brazing material from entering the joint face with the external pipe and can keep airtightness between the connector and the external pipe. Therefore, the medium can be prevented from leaking.

In other words, the stepped sections can change a flowing direction of the flux and the brazing material which flow along the surfaces of the header pipe and the connector and can accumulate them at the stepped sections to stop them before entering the joint face.

The joint face is often formed a screw hole for fixing an external pipe and a screw hole for supporting the heat exchanger, and such screw holes can also be prevented from being contaminated by the flux and the brazing material.

The stepped sections may also be configured to engage an airtightness inspection jig used to check airtightness of the heat exchanger.

The invention recited in claim 2 is the heat exchanger according to claim 1, wherein the stepped sections are continuously formed on the entire outer periphery of the connector.

Thus, the stepped sections are continuously formed along the entire outer periphery of the connector, so that they can thoroughly stop the flux and the brazing material before entering the joint face.

The invention recited in claim 3 is the heat exchanger according to claim 1 or 2, wherein the joint faces are respectively arranged to face downward with respect to a vertical plane when the flux is applied.

Thus, since the joint face is arranged to face downward with respect to the vertical plane when the flux is applied, dripping of an extra portion of the flux can be prevented by the stepped sections, and maintenance of production facilities such as a belt conveyor for conveying the assembled body, a floor within the furnace and the like can be eased.

### BRIEF DESCRIPTION OF THE DRAWINGS

Fig. 1 is a front view of a heat exchanger according to an embodiment of the present invention;
Fig. 2 is an appearance view showing the essential portions of the heat exchanger according to the embodiment of the invention;
Fig. 3 is a perspective view showing a connector according to the embodiment of the invention;
Fig. 4 is a top view of the connector according to the embodiment of the invention; and
Fig. 5 is a schematic view showing application of flux according to the embodiment of the invention.

### BEST MODE FOR CARRYING OUT THE INVENTION

An embodiment of the invention will be described in detail with reference to the accompanying drawings.

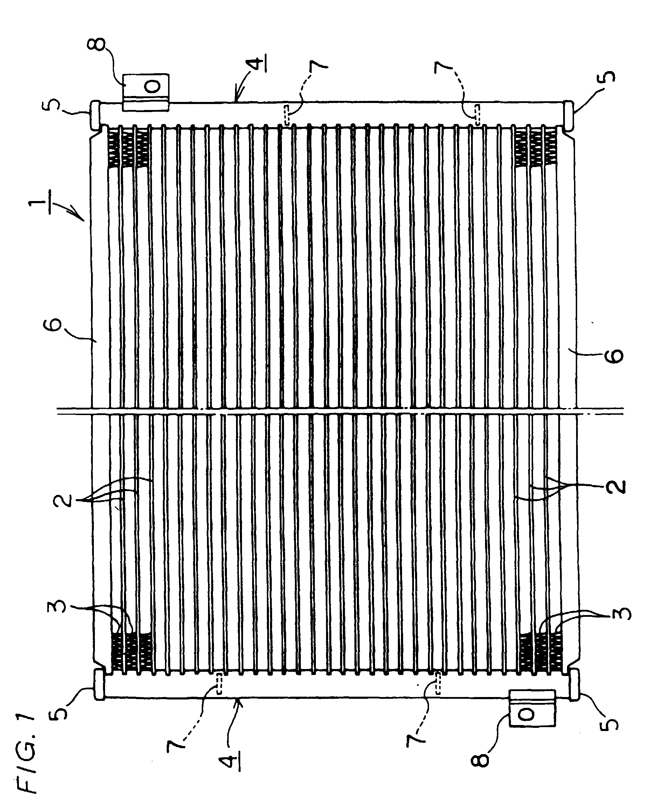

As shown in Fig. 1, a heat exchanger 1 of this embodiment comprises a plurality of tubes 2, 2 layered with fins 3, 3 intervened between them and header pipes 4, 4 which are disposed on both ends of the tubes 2, 2, and the tubes 2, 2 and the header pipes 4, 4 being connected to communicate mutually. The tubes 2, 2 perform heat exchange of a medium, and the header pipes 4, 4 distribute and collect the medium.

The header pipes 4, 4 are closed their top and bottom end openings by caps 5, 5 and mutually supported by side plates 6, 6 and have a round tubular shape which is divided its interior at predetermined intervals by partition plates 7, 7. And, connectors 8, 8 are mounted on required portions of the header pipes 4, 4 to connect external pipes (not shown) for supplying or receiving the medium.

The tubes 2, 2 and the side plates 6, 6 are inserted their both end portions into and connected to the respective header pipes 4, 4. The side plates 6, 6 support the header pipes 4, 4 and also hold the layer of the tubes 2, 2 to reinforce the structural strength of the heat exchanger 1.

In the above structure, the medium taken in through one of the connectors 8, 8 flows to meander a plurality of times to travel between the header pipes 4 and 4 in a predetermined group unit of the tubes 2, 2, flows through the tubes 2, 2 while heat-exchanging, and is discharged from the other connector 8. And, the heat exchange by the medium is promoted by a heat radiation effect of the fins 5, 5 disposed between the tubes 2, 2 and the side plates 6, 6.

The tubes 2, 2, the fins 3, 3, the header pipes 4, 4, the caps 5, 5, the side plates 6, 6, the partition plates 7, 7 and the connectors 8, 8 for the heat exchanger 1 are respectively made of a metallic material having a predetermined shape and a brazing material clad and are assembled into one body by jigs, and the assembled body is brazed into one body. Particularly, the tubes 2, 2, the fins 3, 3 and the header pipes 4, 4 are formed by rolling a brazing sheet which is previously clad with a brazing material.

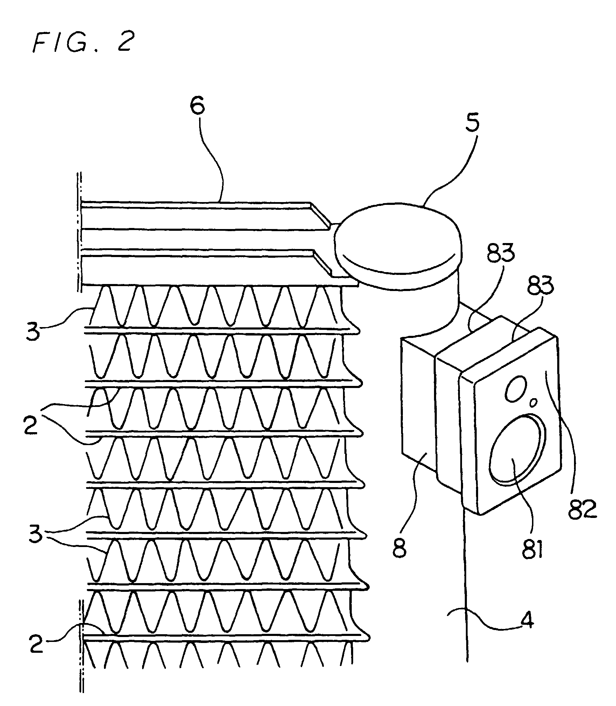

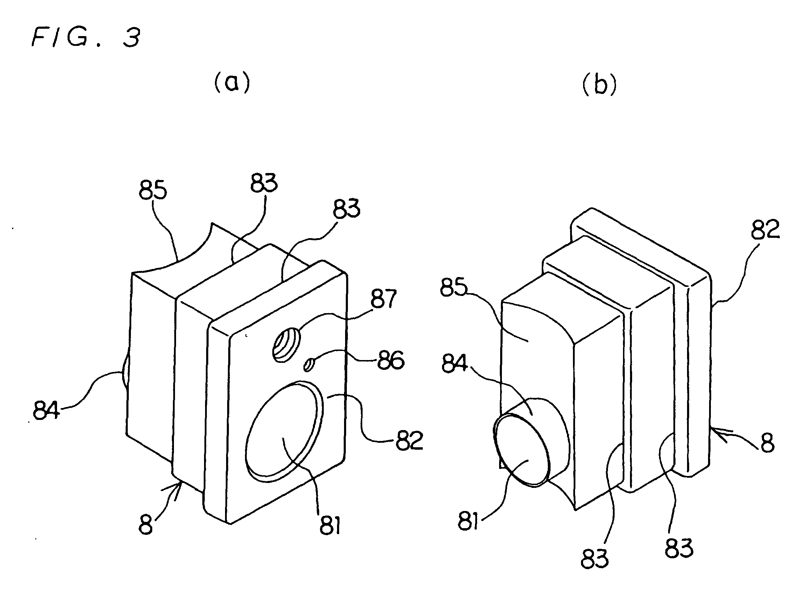

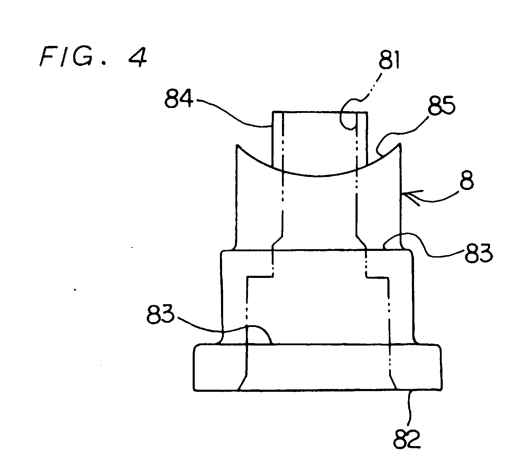

As shown in Fig. 2 to Fig. 4, the connector 8 of this embodiment is configured to flow the heat-exchanging medium from an external pipe to the header pipe 4 or from the header pipe 4 to the external pipe through a communication port 81.

The connector 8 and the external pipe are connected by securely contacting a joint face 82 near the end of the communication port 81 with a joint face of the external pipe.

And the connector 8 is formed a plurality of continuous stepped sections 83, 83 along the entire outer periphery of it. Functions of these stepped sections 83, 83 will be described afterward.

A base end of the communication port 81 is brought into the header pipe 4 by inserting an insertion section 84 protruded from a back face 85 of the connector 8 into the header pipe 4. Specifically, openings (not shown) are formed at required portions of the header pipes 4 to insert the insertion sections 84. And, the connector 8 is fixed by brazing the insertion section 84 and the back face 85 to the header pipe 4. The back face 85 is formed to have a curvature and an appropriate area to externally fit to the outer surface of the header pipe so to provide the connector 8 with sufficient supporting strength.

A screw hole 86 for fixing the external pipe and a screw hole 87 for supporting the heat exchanger 1 are formed on the joint face 82. In other words, the connector 8 of this embodiment is also used as a bracket for supporting the heat exchanger 1.

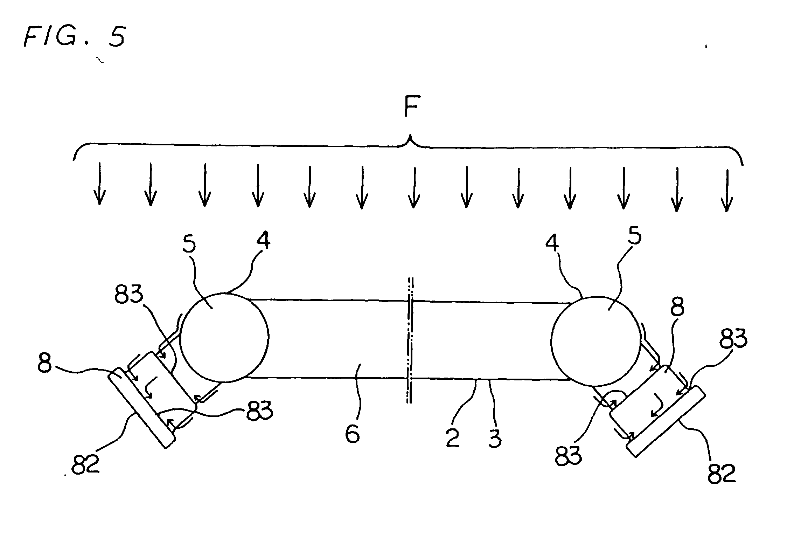

After flux F is sprayed to the aforesaid assembled body as shown in Fig. 5, the assembled body is conveyed into a furnace and brazed by a heat treatment.

As shown in the same drawing, the flux F is prevented from entering the joint face 82 by means of the stepped sections 83, 83 formed on the connector 8. Specifically, the flux F flowing along the surfaces of the header pipe 4 and the connector 8 is disturbed by the stepped sections 83, 83 before entering the joint face 82 and changed its flowing direction or accumulated at the stepped sections 83, 83. Thus, the joint face 82 is prevented from being contaminated by the flux F.

The brazing material clad on the surfaces of the respective members is melted by the heat treatment to flow the surfaces of the header pipe 4 and the connector 8. The brazing material is also disturbed by the stepped sections 83, 83 before entering the joint face 82 and changed its flowing direction or accumulated at the stepped sections 83, 83. Therefore, the joint face 82 is prevented from being contaminated by the flux F.

Particularly, the stepped sections 83, 83 of this embodiment are continuous over the entire outer periphery of the connector 8, so that the flux F and the brazing material are thoroughly stopped before the joint face 82. And, reliability of preventing the contamination of the joint face 82 due to the flux F and the brazing material can be further improved by disposing the stepped sections 83, 83 in multiple numbers.

In this embodiment, when the flux F is applied and the brazing is made, the joint faces 82, 82 of the connectors 8, 8 are positioned to face downward with respect to the vertical plane.

As described above, when the joint faces 82, 82 are faced downward with respect to the vertical plane, dripping of extra portions of the flux F and the brazing material is stopped by the stepped sections 83, 83. As a result, maintenance of production equipment such as a belt conveyor for conveying the assembled body, a floor within the furnace and the like can be eased.

After brazing, one of the connectors 8, 8 is closed, and a gas is injected through the other connector 8 to perform an airtightness test to check the leakage of the medium. The stepped sections 83, 83 of this embodiment are designed to engage an airtightness inspection jig (not shown) used for the airtightness test.

As described above, in the heat exchanger of this embodiment, the connector is provided with the stepped sections in order to prevent the flux and the brazing material for brazing from entering the joint face with the external pipe. Thus, the joint face of the connector with respect to the external pipe can be prevented from being contaminated by the flux and the brazing material, and airtightness of the connector with the external pipe can be maintained. Therefore, the medium can be prevented from leaking.

In other words, the stepped sections can change the flowing direction of the flux and brazing material flowing along the surfaces of the header pipe and the connector and accumulate them at the stepped sections to stop them before entering the joint face.

And, when the screw hole for fixing the external pipe and the screw hole for supporting the heat exchanger are formed on the joint face, these screw holes can be prevented from being contaminated by the flux and the brazing material.

The stepped sections may be configured to engage the airtightness inspection jig for testing airtightness of the heat exchanger.

The stepped sections in the heat exchanger of this embodiment are continuously formed on the outer periphery of the connector, so that the flux and the brazing material can be stopped thoroughly before entering the joint face.

And, in the heat exchanger of this embodiment, the joint face is arranged to face downward with respect to the vertical plane when the flux is applied and the brazing is made, so that dripping of the extra portions of the flux and the brazing material can be prevented by the stepped sections. Therefore, the maintenance of production equipment such as a belt conveyor for conveying the assembled body, the floor within the furnace and the like can be eased.

### INDUSTRIAL APPLICABILITY

The present invention is a heat exchanger which can prevent a joint face of a connector with respect to an external pipe from being contaminated by flux and brazing material, so that airtightness between the connector and the external pipe is not degraded. Thus, the invention is particularly suitable for a heat exchanger of a type in which a medium has a relatively high pressure.

## Claims

1. A heat exchanger, which has tubes for heat exchanging of a medium, header pipes for distributing and collecting the medium, and connectors for connecting an external pipe for supplying or receiving the medium assembled and brazed into one body, characterized in that:
stepped sections are formed on the connectors in order to prevent flux and a brazing material for brazing from entering joint faces of the connectors with the external pipes.

2. The heat exchanger according to claim 1, wherein the stepped sections are continuously formed on the entire outer periphery of the connector.

3. The heat exchanger according to claim 1 or 2, wherein the joint faces are respectively arranged to face downward with respect to a vertical plane when the flux is applied.
